(19) **Europäisches Patentamt European Patent Office Office européen des brevets**

(11) **EP 3 793 958 B1**

(12) **FASCICULE DE BREVET EUROPEEN**

(45) Date de publication et mention
de la délivrance du brevet:
**22.01.2025 Bulletin 2025/04**

(21) Numéro de dépôt: **19722929.7**

(22) Date de dépôt: **14.05.2019**

(51) Classification Internationale des Brevets (IPC):
*C03C 3/062* (2006.01)     *C03C 3/064* (2006.01)
*C03C 3/093* (2006.01)     *C03C 8/04* (2006.01)
*C03C 10/00* (2006.01)     *C03C 17/04* (2006.01)
*C09D 11/38* (2014.01)     *C03C 8/02* (2006.01)
*C03C 8/16* (2006.01)

(52) Classification Coopérative des Brevets (CPC):
**C03C 3/062; C03C 3/064; C03C 3/093; C03C 8/02;
C03C 8/04; C03C 8/16; C03C 10/0027;
C03C 17/04; C09D 11/38;** C03C 2218/119

(86) Numéro de dépôt international:
**PCT/EP2019/062357**

(87) Numéro de publication internationale:
**WO 2019/219691 (21.11.2019 Gazette 2019/47)**

(54) **ENCRE MINÉRALE POUR IMPRESSION PAR JET D'ENCRE SUR SUBSTRAT MINÉRAL**

ANORGANISCHE TINTE FÜR TINTENSTAHLDRUCK AUF ANORGANISCHEM SUBSTRAT

INORGANIC INK FOR INKJET PRINTING ON MINERAL SUBSTRATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.05.2018 FR 1870565**

(43) Date de publication de la demande:
**24.03.2021 Bulletin 2021/12**

(73) Titulaire: **Eurokera S.N.C.
02405 Château Thierry (FR)**

(72) Inventeurs:
• **GUEDON, Thibault
75010 Paris (FR)**
• **LECOMTE, Emmanuel
02400 Nesles La Montagne (FR)**
• **SEME, Charlène
02400 Nogentel (FR)**
• **VILATO, Pablo
75014 Paris (FR)**

(74) Mandataire: **Saint-Gobain Recherche
41 Quai Lucien Lefranc
93300 Aubervilliers (FR)**

(56) Documents cités:
WO-A1-2015/055953     WO-A1-2016/110724
FR-A1- 2 858 974

## Description

La présente invention concerne une encre minérale pour impression par jet d'encre sur substrat minéral. Elle a également trait à un procédé de fabrication d'une plaque vitrocéramique émaillée à l'aide d'une telle encre minérale.

Le besoin de réaliser des décors émaillés complexes sur des substrats minéraux, tels que verres ou vitrocéramiques, produits en petites quantités, requiert de nouveaux procédés d'émaillage plus adaptables que ceux actuellement fondés sur des méthodes sérigraphiques. Les techniques d'impression numérique sans contact répondent à ce besoin. Elles sont adaptables aux contraintes géométriques des produits ainsi qu'à tout type de motifs décoratifs avec de moindres difficultés techniques.

Contrairement aux méthodes sérigraphiques, elles ne nécessitent pas la conception et la fabrication d'un écran spécifique à chaque motif décoratif et adapté à la forme du substrat sur lequel l'émail doit être déposé. Elles permettent d'émailler plus rapidement des surfaces de grande dimension et/ou de dimension variable avec des décors qui peuvent être difFérents, par exemple dans le cas de l'émaillage d'un plan de travail de cuisine. Elles offrent un gamut étendu de couleurs reproductibles à l'aide d'un jeu réduit de couleurs primaires, notamment par quadrichromie. Elles simplifient donc le dépôt d'émaux décoratifs multicolores pour lesquels les méthodes sérigraphiques requièrent des écrans difFérents. Elles peuvent en outre être interfacées avec des dispositifs de traitement d'images numériques afin de personnaliser les décors à la demande à l'aide d'une image numérique utilisée comme modèle.

Parmi les méthodes d'impression numérique sans contact, les méthodes d'impression par jet d'encre sont particulièrement adaptées à l'émaillage de décors complexes sur tout type de support verrier ou vitrocéramique. Les méthodes d'impression par jet d'encre présentent deux variantes techniques principales :

- une variante technique synchrone, dite « jet continu », fondée sur l'émission d'un jet continue de gouttes d'encre vers le substrat ;
- une variante technique asynchrone, dite « goutte-à-la-demande », fondée sur l'émission de gouttes strictement nécessaire à l'impression du motif.

Dans la variante « jet continu », les gouttes d'encre sous générées par fragmentation d'un jet issu d'un orifice sous pression. La taille de gouttes est dépendante principalement du diamètre de l'orifice et de la vitesse du jet. Une fois formées, les gouttes sont chargées électriquement par induction à l'aide d'une électrode, puis défléchies dans une direction donnée à l'aide d'un champ électrique créé entre des plaques de déflexion placées en sortie de buse.

Dans la variante « goutte-à-la-demande », la pression existante dans le réservoir dans lequel est stockée l'encre est insuffisante pour en vaincre la tension superficielle. L'encre forme alors un ménisque convexe ou concave à l'orifice du réservoir. L'encre peut être extraite du réservoir soit par extraction électrostatique soit par extraction mécanique. Dans le cas de l'extraction électrostatique, un champ électrostatique est appliqué entre l'orifice du réservoir et la buse de manière à déformer la surface convexe du ménisque. Lorsque la force électrostatique l'emporte sur la force capillaire, une ou plusieurs gouttes sont éjectées de l'orifice dont la dimension et le nombre dépendent de l'intensité du champ électrostatique appliqué. Dans le cas de l'extraction mécanique, la pression dans le réservoir d'encre est inférieure à la pression atmosphérique. Le ménisque que forme l'encre à l'orifice est concave. Une variation rapide du volume du réservoir, par exemple sous l'effet du déplacement, à l'aide d'un élément piézoélectrique, d'une membrane constituant une paroi du réservoir, provoque l'expulsion d'une goutte d'encre.

Les pâtes minérales élaborées pour les méthodes sérigraphiques ne peuvent généralement pas être directement utilisées dans les méthodes d'impression par jet d'encre. Généralement à base de résines, notamment de résines acryliques, et/ou de corps gras, comme des huiles végétales, elles sont trop visqueuses et leurs tensions de surface sont trop élevées. Elles ne sont pas adaptées pour une impression par jet d'encre, en particulier pour une impression jet d'encre du type « goutte-à-la-demande ». Inversement, les encres minérales sont généralement peu adaptées aux méthodes sérigraphiques.

Le dépôt d'émail par impression par jet d'encre à la surface de produits verriers ou vitrocéramique requiert que l'émail soit préparé sous la forme d'une suspension ou d'une dispersion colloïdale d'une phase solide minérale finement divisée dans une phase liquide généralement organique. Cette encre minérale doit posséder une masse volumique, une viscosité et une tension de surface compatibles avec les méthodes d'impression par jet d'encre. Les valeurs de ces paramètres dépendent des dispositifs d'impression utilisés et conditionnent la qualité des motifs décoratifs obtenus.

La phase solide minérale de la suspension colloïdale comprend généralement une fritte de verre et éventuellement un pigment minéral. La dimension des grains constituant la phase solide minérale est généralement micrométrique, voire sub-micrométrique. La phase liquide comprend majoritairement un solvant, généralement organique. Le type et la quantité de solvant conditionnent en partie les propriétés rhéologiques, la tension de surface et le comportement au séchage de l'encre minérale. Il est également possible d'ajouter un agent dispersant pour prévenir la floculation et/ou la sédimentation de la phase solide, ainsi qu'un agent tensioactif afin d'ajuster la tension de surface de l'encre minérale.

Après dépôt sur un substrat minéral, l'encre minérale est séchée puis est soumise à un traitement thermique de cuisson. Le séchage de l'encre peut être réalisé à température ambiante. Le temps de séchage dépend de la quantité d'encre déposée.

Les lignes industrielles de production peuvent parfois comprendre des dispositifs de séchage afin de réduire le temps de séchage et d'augmenter les cadences de production des pièces émaillées. Pour un dispositif d'impression par jet d'encre comprenant 1000 buses d'impression, les dispositifs de séchage par convection sont généralement appropriés. En revanche, lorsque le nombre de buses d'impression est plus élevé, par exemple 2000 buses d'impression, il peut être recouru à des dispositifs de séchage par rayonnement électromagnétique comme le séchoir à rayonnement infrarouge dont les températures de séchage sont généralement comprises entre 100°C et 150°C.

Pour être durable, un émail doit notamment adhérer au substrat sur lequel il est déposé et résister aux sollicitations mécaniques et chimiques qu'il est susceptible de subir dans les conditions d'utilisation dudit substrat.

Or, il a été constaté que les encres minérales actuelles déposées par impression jet d'encre sur des substrats minéraux, tels que des plaques en céramique, en verre ou en vitrocéramique, utilisés comme surfaces de travail ou de cuisson dans ou à proximité des dispositifs de cuisson, ne permettent pas d'obtenir des émaux résistants aux produits alimentaires et aux détergents. Les effets conjugués des expositions répétées à ces produits et des cycles de chauffage provoquent leur dégradation à moyen ou long terme. D'autre part, ces encres minérales ne résistent pas aux températures élevées que les substrats minéraux sur lesquels elles sont déposées peuvent subir lors de leur fabrication. En particulier, elles ne résistent pas à des températures supérieures à 800°C. Outre une faible adhésion aux substrats, ces émaux présentent les mêmes désavantages que ceux décrits précédemment.

La présente invention résout ces problèmes. Elle concerne une encre minérale pour impression par jet d'encre sur substrat minéral comprenant :

- une fritte de verre,
- un solvant organique,
- un agent dispersant, et
- un agent tensioactif,

caractérisée en ce que la fritte de verre comprend les constituants suivants dans les limites pondérales définies ci-après exprimées en pourcentages massiques de la fritte de verre :

35 à 50 % de $SiO_2$,
15 à 25 % de $Al_2O_3$ ,
1,5 à 4 % de $Li_2O$,
22 à 32 % de $B_2O_3$,
0 à 2 % de $Na_2O$,
2 à 5 % de $K_2O$,
1 à 5 % de $CaO$,
1 à 4 % de $ZrO_2$.

L'encre minérale selon l'invention est adaptée au dépôt par des méthodes d'impression par jet d'encre sur des substrats minéraux en verre, céramique et vitrocéramique.

Un avantage de l'encre minérale selon l'invention est qu'elle permet de créer des jeux de couleurs primaires permettant d'atteindre des gamuts étendus de couleurs lorsqu'elles sont mises en oeuvre dans des dispositifs d'impression par jet d'encre. Chaque couleur primaire peut alors être formulée à l'aide de l'encre minérale selon l'invention en sélectionnant un pigment minéral adapté. La production du gamut peut ensuite être réalisée, par exemple et sans caractère limitatif, par quadrichromie selon le modèle de quatre couleurs primaires CMJN (Cyan, Magenta, Jaune, Noir) ou encore par un jeu de cinq couleurs primaires selon le modèle de cinq couleurs primaires CMJNB (Cyan, Magenta, Jaune, Noir, Blanc). L'encre minérale selon l'invention est particulièrement adaptée pour les modèles de couleurs primaires permettant d'obtenir différents niveaux de gris.

L'encre minérale selon l'invention présente d'autres avantages liés à la synergie entre sa phase minérale et sa phase organique.

Lorsque l'encre minérale selon l'invention est utilisée dans des méthodes d'impression par jet d'encre, elle permet avantageusement de réaliser des motifs d'émail avec des éléments graphiques particulièrement fins par rapport à ceux qui peuvent être obtenus à l'aide d'encre de l'état de la technique. Par exemple, l'encre minéral selon l'invention permet de créer des traits homogènes d'une largeur de l'ordre de 0,05 mm ou des points homogènes d'un diamètre de l'ordre de 0,05 mm. L'épaisseur de l'émail obtenue peut atteindre un ordre de 1 $\mu$m.

Dans les méthodes d'impression par jet d'entre, les buses d'impression peuvent émettre des gouttes parasites dont la taille de ces gouttes dépend de la composition de l'encre minérale utilisé. Si ces gouttes sont trop grosses, des « ponts » ou des « liaisons » secondaires se créent entre les éléments graphiques du motif imprimé, en détériorent l'esthétisme et provoquent dans le substrat utilisé pour le dépôt, des phénomènes locaux de microfissuration qui diminuent la durabilité de l'émail et du substrat en utilisation. Avec les encres minérales de l'état de la technique, la taille des gouttes parasites peut être très importante et provoquer la formation de liaisons secondaires d'émail de plusieurs dizaines de micromètre. Un autre avantage de l'encre selon l'invention est qu'elle limite la formation de gouttes parasites, et ainsi permet d'obtenir des motifs d'une grande finesse et de limiter les phénomènes locaux de microfissuration.

Les proportions massiques du solvant organique, de l'agent dispersant, de l'agent tensioactif et de la fritte de verre sont ajustées de sorte que les propriétés de l'encre minérale soient adaptées au dispositif utilisé pour l'impression par jet d'encre.

En particulier, la tension de surface est de préférence comprise entre 20 et 50 mN.m-1, de préférence entre 25 et 32 mN.m-1 à 25°C.

L'encre minérale a des propriétés d'amincissement sous cisaillement, aussi appelé rhéofluidification, c'est-à-dire que la viscosité diminue avec la vitesse de cisaillement. La viscosité est comprise entre 20 et 100 mPa.s, de préférence entre 20 et 30 mPa.s à 25°C.

La fraction massique de la fritte du verre dans l'encre minérale est avantageusement comprise entre 50 et 65%. Le solvant organique représente de préférence 80% en poids du mélange de solvant organique, d'agent dispersant et d'agent tensioactif de l'encre minérale. Le type et la quantité de solvant organique peuvent être ajustés selon les contraintes techniques du dispositif d'impression par jet d'encre utilisé et les contraintes de production.

Les émaux susceptibles d'être obtenus après séchage et cuisson d'une encre minérale selon l'invention sont particulièrement résistants aux souillures et aux sollicitations mécaniques telles que les frottements métalliques. Pour former un émail à l'aide de l'encre minérale selon l'invention, la température à laquelle l'encre minérale est séchée est de préférence comprise entre 25 et 150°C. La température du traitement thermique de cuisson est de préférence égale ou supérieure à 650°C. De préférence, la température n'excédera pas 1100°C. Au-delà, l'adhésion de l'émail sur le substrat minéral risque d'être pas optimale. En particulier, il peut devenir moins résistant aux sollicitations mécaniques telles que l'abrasion ou les frottements.

Selon un mode particulier de réalisation de l'encre minérale selon l'invention, le solvant organique représente avantageusement entre 70 à 90% en poids de la somme des pourcentages massiques du solvant organique, de l'agent dispersant et de l'agent tensioactif. Une telle quantité de solvant convient à la plupart des dispositifs d'impression par jet d'encre.

Le solvant organique peut être un composé organique liquide à température ambiante ou un mélange de composés organiques liquides à température ambiante comprenant au moins un groupe fonctionnel alcool.

Le choix du composé organique comprenant un groupe fonctionnel alcool dépend de la méthode et/ou du dispositif utilisés pour l'impression par jet d'encre. Si le dépôt de l'encre minérale sur le substrat minéral est lent, il est avantageux d'utiliser un solvant ou un mélange de solvant avec une pression de vapeur saturante faible dans les conditions de pression et de température d'utilisation de la méthode et/ou du dispositif. En d'autres termes, dans les conditions de température et de pression standard, afin d'éviter que le solvant ou le mélange de solvants ne s'évapore trop rapidement, sa température d'ébullition peut être plus élevée. Des exemples non limitatifs de solvant organique sont : le méthylène glycol, l'éthylène glycol, le propylène glycol, le butylène glycol, le méthanol, l'éthanol, le propanol, le butanol, les éthers de glycol tels que l'éther méthylique de propylène glycol ou l'éther méthylique du dipropylène glycol.

L'agent dispersant est, de préférence, un copolymère ou un mélange de copolymères comprenant au moins un groupe fonctionnel acide. L'agent dispersant permet de prévenir la floculation et/ou la sédimentation de la phase solide. Il représente de préférence 3 à 7%, au maximum 10%, en poids de la somme des pourcentages massiques du solvant organique, de l'agent dispersant et de l'agent tensioactif. Les sels d'alkylammonium d'un copolymère comprenant un ou plusieurs groupes fonctionnels acides sont des exemples non limitatifs d'agent dispersant.

L'agent tensioactif est de préférence un polyéther ou un mélange de polyéthers. Il représente de préférence 0,05% à 0,5% en poids de la somme des pourcentages massiques du solvant organique, de l'agent dispersant et de l'agent tensioactif.

L'encre minérale selon l'invention peut être utilisée sans ajout de pigment minéral colorant. La couleur de l'émail susceptible d'être obtenu à l'aide de l'encre minérale de l'invention lorsqu'elle ne comprend pas de pigment minéral colorant dépend de la couleur du substrat minéral sur lequel elle est déposée. A titre d'exemple, sur une plaque vitrocéramique sombre, de couleur noire ou brune, pour un émail d'épaisseur final d'environ 2,8μm, les paramètres de couleur, exprimées dans l'espace de couleur L*a*b* CIE 1976, peuvent être L*=27,22, a*=0,65, b*=-0,88 avec un illuminant D65 et un angle d'observation de 10°.

Dans un mode de réalisation de l'invention, l'encre minérale peut comprendre en outre un pigment minéral afin de procurer une teinte ou une couleur à l'émail. Le pigment minéral permet d'ajuster la couleur de l'encre minérale et de l'émail. Le pigment minéral peut être à base d'oxydes métalliques et/ou de métaux ou alliages métalliques susceptibles de s'oxyder lors du traitement thermique de l'encre minérale pour former l'émail. Des exemples non limitatifs de pigments minéraux sont l'oxyde de titane, l'oxyde de cérium, l'oxyde de cobalt, l'oxyde de fer, l'oxyde de zirconium, l'oxyde de manganèse, les spinels, ou encore les alumines dopées.

La somme des pourcentages massiques de la fritte de verre et du pigment minéral représente avantageusement 50 à 80% en poids de l'encre minérale. Au-dessus d'environ 80%, la fraction solide dans l'encre minérale peut devenir trop importante et être une source de difficultés techniques pour une mise en oeuvre de l'encre minérale par impression par jet d'encre. En dessous d'environ 50%, il y a un risque que la fraction solide soit trop dispersée sur le substrat après dépôt par impression par jet d'encre et que l'émail obtenu ne soit pas uniformément réparti sur le substrat. La couleur de l'émail obtenu risque de ne pas être uniforme.

De préférence, le pourcentage massique de la fritte de verre représente 65% à 90% en poids de la somme des pourcentages massiques de la fritte de verre et du pigment minéral. Il a été constaté expérimentalement que cet intervalle de valeur est un intervalle optimal pour obtenir un émail homogène avec une couleur satisfaisante. Un pourcentage massique de fritte de verre inférieur à 65% peut entrainer une mauvaise adhésion de l'émail sur le substrat. Les limites indiquées sont indicatives. Elles dépendent notamment de l'intensité ou de la saturation de la coloration apportée par le pigment minéral et des effets esthétiques recherchés pour l'émail.

Dans un mode particulier de réalisation, le D90 de la distribution granulométrique du mélange de la fritte de verre et du pigment minéral est comprise entre 1 $\mu$m et 2 $\mu$m. Le D90 est calculé à partir de la distribution granulométrique déterminée par des méthodes de granulométrie laser selon la norme ISO 13320:2009. Il correspond à la taille des particules qui représentent 90% du volume total de particules du mélange. En d'autres termes, 90% du volume de particules du mélange de la fritte de verre et du pigment minéral est constitué de particules ayant une taille comprise entre 1$\mu$m et 2$\mu$m.

Les encres minérales pour impression par jet d'encre sur substrat minéral peuvent contenir un liant ou un mélange de liant organique et/ou inorganique susceptibles de servir à maintenir la structure et la forme des dépôts sur le substrat minéral jusqu'à la formation de l'émail après cuisson. Des exemples de liants sont les liants de type sol-gel organiques ou les résines acryliques.

Dans un mode particulier de réalisation de l'invention, l'encre minérale ne comprend pas un tel liant organique et/ou inorganique. En effet, bien qu'il ne soit pas exclu qu'elle puisse en contenir, l'encre minérale de l'invention ne requiert pas un tel liant organique et/ou inorganique pour former un émail aux contours précis et dépourvue de déformation.

L'invention a également trait à une méthode de fabrication d'une encre minérale. La méthode comprend les étapes suivantes :

    a. la fourniture d'une fritte de verre comprenant les constituants suivants dans les limites pondérales définies ci-après exprimées en pourcentages massiques de la fritte de verre :

        35 à 50 % de $SiO_2$,
        15 à 25 % de $Al_2O_3$,
        1,5 à 4 % de $Li_2O$,
        22 à 32 % de $B_2O^3$,
        0 à 2 % de $Na_2O$,
        2 à 5 % de $K_2O$,
        1 à 5 % de CaO,
        1 à 4 % de $ZrO_2$.

    b. le mélange de la fritte de verre avec un pigment minéral ;
    c. l'ajout d'un solvant organique et d'un agent dispersant au mélange obtenu à l'étape (b) ;
    d. le broyage par recirculation du mélange obtenu à l'étape (c) jusqu'à ce que le D90 de la distribution granulométrique du mélange de la fritte de verre et du pigment minéral soit compris entre 1 et 2$\mu$m ;
    e. l'ajout d'un agent tensioactif à la préparation broyée obtenue à l'étape (d).

La fritte de verre fournie à l'étape (a) est généralement obtenue selon les méthodes de fabrication de produit verrier connues de l'état de la technique. En particulier, elle peut être obtenue par trempe à l'eau d'un silicate liquide ayant la composition recherchée. Ce silicate liquide est généralement formé par la fusion à haute température d'un mélange de matières premières vitrifiables. Les matières premières du mélange sont porteuses des éléments entrant dans la composition de la fritte de verre. Elles sont dans des proportions telles qu'une fois le mélange fondu le silicate fondu possède la composition recherchée pour la fritte de verre.

L'encre minérale selon l'invention est particulièrement adaptée au dépôt d'émaux décoratifs sur une plaque vitrocéramique. Une vitrocéramique est un matériau composite comprenant une phase amorphe dans laquelle sont dispersés des phases cristallines ou cristaux. Elle est généralement obtenue par le traitement thermique d'un verre, dit « verre mère », afin de faire cristalliser, de manière contrôlée, des cristaux dans son volume. Ce traitement par lequel un verre cristallise partiellement est dit « traitement de céramisation » ou simplement « céramisation ». Les propriétés physico-chimiques finales de la vitrocéramique dépendent de la composition du verre mère et du traitement de céramisation.

L'encre minérale de l'invention peut être déposée par impression par jet d'encre directement sur une plaque de verre mère de vitrocéramique avant le traitement de céramisation. Il n'est pas nécessaire qu'un procédé de fabrication d'une plaque vitrocéramique mettant en oeuvre l'encre minérale selon l'invention comprenne une étape de traitement thermique propre à la formation d'un émail à partir de l'encre minérale. En ce sens, l'invention concerne également un procédé de fabrication d'une plaque vitrocéramique émaillée comprenant les étapes suivantes :

a. la fourniture d'une plaque de verre mère de vitrocéramique ;
b. le dépôt d'un émail cru sur la surface de la plaque de verre mère par une méthode d'impression par jet d'encre d'une encre minérale selon l'un quelconque des modes de réalisation décrits ci-dessus ;
c. le traitement thermique de la plaque de verre mère de vitrocéramique comprenant l'émail cru selon le cycle de céramisation suivant :

i. un palier de germination entre 650°C et 860°C, pendant 15 minutes à 4 heures,
ii. un palier de croissance cristalline entre 860°C et 1100°C, pendant 10 minutes à 2 heures.

L'encre minérale de l'invention peut aussi être déposée par impression jet d'encre directement sur une plaque de vitrocéramique avant d'être séchée puis cuite à une température d'environ 850°C pendant 30 minutes. Dans ce mode de réalisation, l'exposition de l'encre minérale séchée à des températures moins élevées que celles du procédé décrit précédemment peut conférer à l'émail certaines propriétés particulières, notamment, celles relatives à la couleur.

Dans un mode de réalisation du procédé de fabrication d'une plaque vitrocéramique émaillée à l'aide d'une encre minérale selon l'invention, la méthode d'impression jet d'encre est une méthode d'impression par jet d'encre du type goutte-à-la-demande. En particulier, l'encre minérale est adaptée pour une méthode d'impression par jet d'encre de type goutte-à-la-demande par extraction mécanique. De préférence, l'extraction mécanique est réalisée à l'aide d'un élément piézoélectrique qui, sous l'effet d'impulsion électrique, déplace une membrane constituant une paroi du réservoir dans lequel l'encre est stockée.

A titre d'exemple non limitatif, la plaque de verre mère de vitrocéramique du procédé de fabrication d'une plaque vitrocéramique émaillée est formée à partir d'un verre d'aluminosilicate de lithium comprenant les constituants suivants dans les limites pondérales définies ci-après exprimées en pourcentages massiques du verre :

| | |
|---|---|
| $SiO_2$ | 52-75%, |
| $Al_2O_3$ | 12-27%, |
| $Li_2O$ | 1,5-5,5%, |
| $Na_2O$ | 0-3%, |
| $K_2O$ | 0-3%, |
| CaO | 0-5%, |
| MgO | 0-5%, |
| SrO | 0-5%, |
| BaO | 0-5%, |
| ZnO | 0-5%, |
| $TiO_2$ | 1-6%, |
| $ZrO_2$ | 0-3%, |
| $P_2O_5$ | 0-8%. |

L'invention a également pour objet une plaque vitrocéramique émaillée susceptible d'être obtenue à l'aide d'un procédé de fabrication selon l'un quelconque des modes de réalisation décrits précédemment. Une telle plaque émaillée peut être avantageusement utilisée comme surface de cuisson d'un dispositif de cuisson. En effet, les émaux formés sur sa surface à partir d'une encre minérale selon l'invention sont particulièrement adaptés pour ce type d'application. Ils présentent une résistance élevée aux frottements métalliques, notamment aux frottements métalliques liés aux déplacements de casseroles, ainsi qu'une durabilité chimique et mécanique avantageuse pour des expositions répétées aux produits alimentaires et aux cycles de chauffage. En ce sens, l'invention porte aussi sur un dispositif de cuisson comprenant une plaque vitrocéramique émaillée obtenue par un procédé de fabrication d'une plaque vitrocéramique émaillée selon l'un des modes de réalisation décrits précédemment.

Les caractéristiques et les avantages de l'invention sont illustrés par les exemples décrits ci-après.

La nature et les proportions des constituants d'un exemple E1 d'encre minérale selon l'invention sont indiquées dans le tableau 1 ci-dessous. Les proportions des constituants sont exprimées en pourcentages massiques de l'encre minérale.

[Tableaux 1]

| Constituant | Composition | Quantité (% mass) |
|---|---|---|
| Fritte de verre | Fritte 1 | 46,8 |
| Pigment | Dioxyde de titane ($TiO_2$) | 18,2 |
| Solvant | 1-methoxy-2-propanol | 30,6 |
| Agent dispersant | Sel d'alkylolammonium d'un copolymère comprenant des groupes acides | 4,0 |
| Agent tensioactif | Polydimethylsiloxane | 0,4 |

La fraction solide de l'encre minérale représente 65% de la masse d'encre minérale. La fraction liquide représente 35% de la masse d'encre minérale.

La nature et les proportions des constituants de la fritte de verre Fritte 1 sont indiquées dans le tableau 2 ci-dessous. Les proportions sont exprimées en pourcentages massiques de la fritte de verre.

[Tableaux 2]

| Constituant | Quantité (% mass) |
|---|---|
| $SiO_2$ | 42,90 |
| $Al_2O_3$ | 18,50 |
| $Li_2O$ | 2,10 |
| $B_2O_3$ | 27,00 |
| $Na_2O$ | 0,90 |
| $K_2O$ | 3,40 |
| CaO | 2,70 |
| $ZrO_2$ | 2,50 |

L'encre minérale de l'exemple E1 a été fabriquée selon le protocole suivant :

a. la fourniture d'une fritte de verre Fritte 1, obtenue par trempe d'un mélange de silicate liquide vitrifiable ;
b. le mélange de la fritte de verre avec le pigment minéral ;
c. l'ajout du solvant organique et de l'agent dispersant au mélange obtenu à l'étape (b) ;
d. le broyage en voie humide par recirculation du mélange obtenu à l'étape (c) jusqu'à ce que le D90 de la distribution granulométrique du mélange de la fritte de verre et du pigment minéral soit compris entre 1 et 2$\mu$m ;
e. l'ajout du l'agent tensioactif à la préparation broyée obtenue à l'étape (d).

Les propriétés physico-chimiques et rhéologiques de l'encre minérale de l'exemple E1 sont indiquées dans le tableau 3 ci-dessous.

La tension de surface a été mesurée à l'aide d'un tensiomètre Kibron EZPi selon les méthodes de Wilhelmy et de Noüy-Paddaa. La viscosité a été mesurée selon la méthode Brookfield pour deux taux de cisaillement, 50s-1 et 100s-1. Le D90 est calculé à partir de la distribution granulométrique déterminée par des méthodes de granulométrie laser selon la norme ISO 13320:2009.

[Tableaux 3]

| Tension de surface (mN.m-1) à 22°C | D90 Granulométrie phase solide ($\mu$m) | Viscosité (mPa.s) | |
|---|---|---|---|
| | | Cisaillement 50s-1 | Cisaillement 100s-1 |
| 25,5 | 1,1 | 27,4 | 26,3 |

**EP 3 793 958 B1**

A des fins de comparaison, deux encres minérales A et B selon l'état de la technique ont été reproduites. La nature et les proportions des constituants des frittes de verre utilisées pour ces deux encres A et B sont indiquées dans le tableau 4 ci-dessous. Les proportions sont exprimées en pourcentages massiques de la fritte de verre

[Tableaux 4]

| Constituant | Quantité (% mass) | |
|---|---|---|
| | A | B |
| $SiO_2$ | 33,7 | 16,5 |
| $Al_2O_3$ | 2,9 | 2,2 |
| $Bi_2O_3$ | 56,6 | 80,2 |
| $Na_2O$ | 3,3 | 0,4 |
| ZnO | 1,2 | 0,0 |
| CaO | 0,8 | 0,2 |
| $TiO_2$ | 1,6 | 0,4 |

Trois plaques vitrocéramiques émaillées ont été fabriquées à l'aide des encres minérales E1, A et B respectivement selon un procédé comprenant les étapes suivantes :

a. la fourniture d'une plaque de verre mère de vitrocéramique ;
b. le dépôt d'un émail cru sur la surface de la plaque de verre mère par une technique d'impression par jet d'encre de type goutte-à-goutte de l'encre minérale ;
c. le séchage d'un émail à température ambiante ou à l'aide d'un dispositif de séchage par rayonnement infrarouge ;
d. le traitement thermique de la plaque de verre mère de vitrocéramique comprenant l'émail cru selon le cycle de céramisation suivant :

i. un palier de germination cristalline entre 650°C et 860°C, pendant 15 minutes à 4 heures,
ii. un palier de croissance cristalline entre 860°C et 1100°C, pendant 10 minutes à 2 heures.

Les encres minérales ont été imprimées de manière à former des textures de saillies sinueuses aléatoires. Les épaisseurs varient aléatoirement entre 2 $\mu$m et 3 $\mu$m et les largeurs varient aléatoirement entre 0,2 mm et 1 mm. Les saillies peuvent être sous la forme de points, de lignes et/ou de courbes.

La résistance aux souillures des plaques ainsi que leur aptitude à être nettoyables ont été évaluées à l'aide de protocoles simulant des conditions réelles d'utilisation d'une plaque émaillée comme surface de cuisson dans un dispositif de cuisson ou comme surface de travail.

La résistance aux souillures a été évaluée à l'aide du protocole suivant. Une plaque vitrocéramique émaillée est tout d'abord insérée sur un dispositif de cuisson dans lequel elle sert de surface de cuisson. Un mélange de viande hachée, d'oeuf, de lait, de sucre, de farine, de gruyère et de concentré de tomate est placé entre une casserole contenant 100mL d'eau et la zone émaillée de la plaque vitrocéramique. Le mélange est en contact avec la zone émaillée. Le mélange est ensuite chauffé jusqu'à évaporation de l'eau de la casserole, puis encore pendant 10 minutes de manière à ce qu'il commence à carboniser et à adhérer à la plaque vitrocéramique. Les étapes d'application du mélange et de chauffe sont répétées cinq fois. Le degré de souillure est évalué visuellement selon l'échelle de degrés suivante :

0 : aucune tache ;
1 : peu de tache ;
2 : tache au contraste marqué ;
3 : tache au contraste très marqué.

Ce niveau de souillure peut aussi être exprimé à l'aide de l'indice globale suivant :

[Math. 1]

$$I_g = \frac{\sum_i^3 (i^2 Z_i)/100}{3^2}$$

où i est le degré de souillure et Zi la quantité de surface, exprimée en pourcentage, dont le degré de souillure est i. Plus le niveau de souillure, Ig, est faible, plus la résistante de l'émail aux souillures est élevée. Inversement, plus le niveau de souillure, Ig, est élevé, plus la résistante de l'émail aux souillures est faible.

L'aptitude des émaux à être nettoyée est évaluée après nettoyage au grattoir et à l'aide d'un détergent spécialement conçu pour le nettoyage des plaques de cuisson et disponible dans le commerce, selon l'échelle de niveaux suivante :

A : nettoyage facile ;
B : nettoyage plus difficile ;
C : nettoyage difficile.

Les résultats des tests d'évaluation sont regroupés dans le tableau ci-dessous.

[Tableaux 5]

| Encre minérale | Souillure & nettoyage | | |
|---|---|---|---|
| | Degré souillure | Ig | Niveaux nettoyage |
| E1 | 1 | <0,1 | B |
| A | 3 | 1 | C |
| B | 3 | 1 | C |

Les résultats du tableau montrent que l'émail obtenu à l'aide de l'encre minérale selon l'invention est plus résistant aux souillures que les émaux obtenus à l'aide des encres minérales selon l'état de la technique. L'émail obtenu à l'aide de l'encre minérale E1 selon l'invention se tache peu. Son niveau de souillure, Ig, est inférieur à 0,1. Peu de surface de l'émail est couverte de souillures. En revanche, les émaux obtenus à l'aide des encres minérales A et B selon l'état de la technique présentent un niveau de souillure beaucoup plus élevé. Une grande partie des surfaces de ces émaux est couverte de souillures importantes.

L'émail obtenu à l'aide de l'encre minérale E1 selon l'invention est également plus facile à nettoyer que les émaux obtenus à l'aide des encres minérales A et B.

Un contre-exemple, CEx1, de plaque vitrocéramique émaillée comprenant un émail déposé par sérigraphie a également été fabriqué afin de comparer les résistances aux frottements métalliques d'un émail susceptible d'être obtenu à l'aide d'une encre minérale selon l'invention et un émail obtenu par sérigraphie.

Tout d'abord, une pâte minérale pour sérigraphie comprenant une poudre d'émail et un médium à base d'huile de pin a été préparée. La poudre émail est composée d'environ 70% en poids d'une fritte de verre de même composition que celle utilisée pour l'encre minérale de l'invention, et d'environ 30% en poids d'un pigment minéral noir à base d'un mélange d'oxydes de fer, de chrome, de nickel, de silicium et de cobalt. Le D90 de la distribution granulométrique de la poudre d'email est compris entre 1 µm et 2 µm.

La pâte minérale a ensuite été déposée sur un verre mère de vitrocéramique à l'aide des méthodes usuelles de sérigraphie. Puis, l'ensemble a fait l'objet d'un traitement thermique selon le cycle suivant :

i. un palier de germination cristalline entre 650°C et 860°C, pendant 15 minutes à 4 heures,
ii. un palier de croissance cristalline entre 860°C et 1100°C, pendant 10 minutes à 2 heures.

Un autre exemple E2 de plaque vitrocéramique émaillée comprenant un émail obtenu à l'aide de l'encre minérale de l'invention a également été réalisé selon la même méthode que celle employée pour l'exemple E1. Une encre minérale identique à celle de l'exemple E1 a été utilisée sauf le pigment minéral qui a été remplacé par le même pigment minéral que celui de la pâte d'émail du contre-exemple CEx1.

La résistance aux frottements métalliques des émaux a été évaluée pour les deux plaques vitrocéramiques des exemples E2 et CEx1 selon le protocole suivant. Tout d'abord, la surface de la zone émaillée de la plaque vitrocéramique est frottée successivement avec un mouvement de va-et-vient à l'aide de plusieurs éléments métalliques tels que pièces de monnaie et casseroles métalliques et/ou émaillées. La surface est ensuite nettoyée à l'aide de différents produits détergents spécialement conçus pour le nettoyage des plaques de cuisson et disponibles dans le commerce. La dégradation de la surface émaillée est évaluée visuellement sur une échelle de 0 à 20 ; le degré 0 correspond à une dégradation totale de la surface émaillée et le degré 20 correspond à une absence totale de dégradation. En d'autres termes, plus le degré est élevé, plus l'émail est résistant aux frottements métalliques.

Les résultats des tests d'évaluation sont regroupés dans le tableau 6 ci-dessous. Ils montrent qu'un même émail obtenu à l'aide d'une encre minérale selon l'invention E2 est plus résistant aux frottements métalliques que lorsqu'il est obtenu à l'aide d'une méthode sérigraphique.

[Tableaux 6]

| Encre minérale | Frottements métalliques |
|---|---|
| E2 | 15 |
| CEx 1 | 12,5 |

Ces résultats montrent clairement que l'encre minérale selon l'invention permet de former des émaux ayant une résistance aux frottements métalliques et aux souillures ainsi qu'une aptitude à être nettoyables supérieures à celles des émaux obtenus à partir d'encres minérales ou de pâtes d'émail pour sérigraphie de l'état de la technique.

Les effets de la taille atteignable des éléments graphiques des motifs sur les phénomènes locaux de microfissuration de l'émail obtenu et du substrat ont été évalués pour l'encre minérale selon l'invention. Le tableau 7 regroupe les résultats obtenus pour trois plaques émaillées, l'une avec l'encre minérale selon l'invention, les deux autres avec une encre minérale de l'état de la technique. Ces deux plaques ont été fabriquées selon le même protocole que celui utilisé pour les essais comparatifs précédents. Le motif d'émail est une image imprimée constituée de marbrures couvant la totalité de la surface des plaques.

Les épaisseurs du motif sont les épaisseurs minimales atteignables par chacune des encres minérales.

Les phénomènes locaux de microfissuration ont été évalués par une mesure de la résistance à la rupture (MOR) aux niveaux des motifs d'émail selon une méthode de flexion trois points avec la face émaillée de la plaque en extension. Entre 10 et 20 échantillons ont été mesurés pour chacune des plaques.

[Tableaux 7]

| Encre | Epaisseur ($\mu$m) | MOR (MPa) | Ecart-type MOR |
|---|---|---|---|
| E1 | 1,0 | 79 | 9 |
| A | 4,0 | 59 | 19 |
| B | 4,0 | 47 | 12 |

La valeur du MOR obtenue avec l'encre minérale selon l'invention est nettement plus élevée que celle obtenue avec les encres de l'état de la technique. Elle présente également un écart-type plus faible, ce qui signifie que la valeur du MOR est plus homogène dans l'ensemble du motif.

Les résultats montrent que, grâce à l'encre minérale selon l'invention, il est possible d'obtenir des éléments graphiques d'une grande finesse contrairement à une encre de l'état de la technique. Cette grande finesse contribue à un meilleur esthétisme du décor et une limitation des phénomènes locaux de microfissuration, contribuant ainsi à une plus grande durabilité et plus grande résistance aux souillures de l'émail.

**Revendications**

1.  Encre minérale pour impression par jet d'encre sur substrat minéral comprenant :

- une fritte de verre,
- un solvant organique,
- un agent dispersant, et
- un agent tensioactif,

**caractérisée en ce que** la fritte de verre comprend les constituants suivants dans les limites pondérales définies ci-après exprimées en pourcentages massiques de la fritte de verre :

35 à 50 % de $SiO_2$,
15 à 25 % de $Al_2O_3$,
1,5 à 4 % de $Li_2O$,
22 à 32 % de $B_2O_3$,
0 à 2 % de $Na_2O$,
2 à 5 % de $K_2O$,
1 à 5 % de CaO,
1 à 4 % de $ZrO_2$.

2. Encre minérale selon la revendication 1, telle qu'elle comprend, en outre, un pigment minéral.

3. Encre minérale selon l'une quelconque des revendications 1 à 2, telle que la somme des pourcentages massiques de la fritte de verre et du pigment minéral représente 50 à 80% en poids de l'encre minérale.

4. Encre minérale selon l'une quelconque des revendications 2 à 3, telle que le pourcentage massique de la fritte de verre représente 65% à 90% en poids de la somme des pourcentages massiques de la fritte de verre et du pigment minérale.

5. Encre minérale selon l'une quelconque des revendications 1 à 4, telle que le solvant organique représente 70 à 90% en poids de la somme des pourcentages massiques du solvant organique, de l'agent dispersant et de l'agent tensioactif.

6. Encre minérale selon l'une quelconque des revendications 1 à 5, telle que le solvant organique est un composé organique liquide à température ambiante ou un mélange de composés organiques liquides à température ambiante comprenant au moins un groupe fonctionnel alcool.

7. Encre minérale selon l'une quelconque des revendications 1 à 6, telle que l'agent dispersant est un copolymère ou un mélange de copolymères comprenant au moins un groupe fonctionnel acide.

8. Encre minérale selon l'une quelconque des revendications 1 à 7, telle que l'agent tensioactif est un polyéther ou un mélange de polyéthers.

9. Encre minérale selon l'une quelconque des revendications 1 à 8, telle le D90 de la distribution granulométrique du mélange de la fritte de verre et du pigment minéral est comprise entre $1\mu$m et $2\mu$m.

10. Méthode de fabrication d'une encre minérale comprenant les étapes suivantes :

   a. la fourniture d'une fritte de verre qui comprend les constituants suivants dans les limites pondérales définies ci-après exprimées en pourcentages massiques de la fritte de verre :

   35 à 50 % de $SiO_2$,
   15 à 25 % de $Al_2O_3$,
   1,5 à 4 % de $Li_2O$,
   22 à 32 % de $B_2O_3$,
   0 à 2 % de $Na_2O$,
   2 à 5 % de $K_2O$,
   1 à 5 % de CaO,
   1 à 4 % de $ZrO_2$ ;

   b. le mélange de la fritte de verre avec un pigment minéral ;
   c. l'ajout d'un solvant organique et d'un agent dispersant au mélange obtenu à l'étape (b) ;
   d. le broyage par recirculation du mélange obtenu à l'étape (c) jusqu'à ce que le D90 de la distribution granulométrique du mélange de la fritte de verre et du pigment minéral soit compris entre 1 et 2 $\mu$m ;
   e. l'ajout d'un agent tensioactif à la préparation broyée obtenue à l'étape (d).

11. Procédé de fabrication d'une plaque vitrocéramique émaillée comprenant les étapes suivantes :

   a. la fourniture d'une plaque de verre mère de vitrocéramique ;

b. le dépôt d'un émail cru sur la surface de la plaque de verre mère par une méthode d'impression par jet d'encre d'une encre minérale selon l'une quelconque des revendications 1 à 9 ;

c. le traitement thermique de la plaque de verre mère de vitrocéramique comprenant l'émail cru selon le cycle de céramisation suivant :

  i. un palier de germination entre 650°C et 860°C, pendant 15 minutes à 4 heures,
  ii. un palier de croissance entre 860°C et 1100°C, pendant 10 minutes à 2 heures.

12. Procédé de fabrication d'une plaque vitrocéramique émaillée selon la revendication 11, tel que la méthode d'impression jet d'encre est une méthode d'impression jet d'encre du type goutte-à-la-demande.

13. Procédé de fabrication d'une plaque vitrocéramique émaillée selon l'une de revendications 11 à 12, tel que la plaque de verre mère de vitrocéramique est formée par un verre d'aluminosilicate de lithium comprenant les constituants suivants dans les limites pondérales définies ci-après exprimées en pourcentages massiques du verre :

| | |
|---|---|
| $SiO_2$ | 52-75%, |
| $Al_2O_3$ | 12-27%, |
| $Li_2O$ | 1,5-5,5%, |
| $Na_2O$ | 0-3%, |
| $K_2O$ | 0-3%, |
| CaO | 0-5%, |
| MgO | 0-5%, |
| SrO | 0-5%, |
| BaO | 0-5%, |
| ZnO | 0-5%, |
| $TiO_2$ | 1-6%, |
| $ZrO_2$ | 0-3%, |
| $P_2O_5$ | 0-8%. |

14. Plaque vitrocéramique émaillée susceptible d'être obtenue à l'aide d'un procédé selon l'une quelconque des revendications 11 à 13.

15. Dispositif de cuisson comprenant une plaque vitrocéramique émaillée selon la revendication 14.

**Patentansprüche**

1. Mineralische Tinte für einen Tintenstrahldruck auf ein mineralisches Substrat, umfassend:

  - eine Glasfritte,
  - ein organisches Lösungsmittel,
  - ein Dispergiermittel, und
  - ein Tensid,

**dadurch gekennzeichnet, dass** die Glasfritte die folgenden Bestandteile innerhalb der nachstehend definierten Gewichtsgrenzen umfasst, ausgedrückt als Massenprozente der Glasfritte:

35 bis 50 % $SiO_2$,
15 bis 25 % $Al_2O_3$,
1,5 bis 4 % $Li_2O$,
22 bis 32 %, $B_2O_3$,
0 bis 2 % $Na_2O$,
2 bis 5 % $K_2O$,
1 bis 5 % CaO,
1 bis 4 % $ZrO_2$.

**2.** Mineralische Tinte nach Anspruch 1, wobei sie ferner ein mineralisches Pigment umfasst.

**3.** Mineralische Tinte nach einem der Ansprüche 1 bis 2, wobei die Summe der Massenprozente der Glasfritte und des mineralischen Pigments 50 bis 80 Gew.-% der mineralischen Tinte ausmacht.

**4.** Mineralische Tinte nach einem der Ansprüche 2 bis 3, wobei der Massenprozentsatz der Glasfritte 65 bis 90 Gew.-% der Summe der Massenprozente der Glasfritte und des mineralischen Pigments ausmacht.

**5.** Mineralische Tinte nach einem der Ansprüche 1 bis 4, wobei das organische Lösungsmittel 70 bis 90 Gew.-% der Summe der Massenprozente des organischen Lösungsmittels, des Dispergiermittels und des Tensids ausmacht.

**6.** Mineralische Tinte nach einem der Ansprüche 1 bis 5, wobei das organische Lösungsmittel eine bei Raumtemperatur flüssige organische Verbindung oder eine Mischung aus bei Raumtemperatur flüssigen organischen Verbindungen ist, umfassend mindestens eine funktionelle Alkoholgruppe.

**7.** Mineralische Tinte nach einem der Ansprüche 1 bis 6, wobei das Dispergiermittel ein Copolymer oder eine Mischung von Copolymeren ist, umfassend mindestens eine funktionelle Säuregruppe.

**8.** Mineralische Tinte nach einem der Ansprüche 1 bis 7, wobei das Tensid ein Polyether oder eine Mischung aus Polyethern ist.

**9.** Mineralische Tinte nach einem der Ansprüche 1 bis 8, wobei der D90 der Partikelgrößenverteilung der Mischung aus der Glasfritte und dem mineralischen Pigment zwischen 1 $\mu$m und 2 $\mu$m liegt.

**10.** Verfahren zum Herstellen einer mineralischen Tinte, umfassend die folgenden Schritte:

a. Bereitstellen einer Glasfritte, die die folgenden Bestandteile innerhalb der nachstehend definierten Gewichtsgrenzen umfasst, ausgedrückt als Massenprozente der Glasfritte:

35 bis 50 % $SiO_2$,
15 bis 25 % $Al_2O_3$,
1,5 bis 4 % $Li_2O$,
22 bis 32 % $B_2O_3$,
0 bis 2 % $Na_2O$,
2 bis 5 % $K_2O$,
1 bis 5 %; CaO,
2 bis 4 %; $ZrO_2$;

b. Mischen der Glasfritte mit einem mineralischen Pigment;
c. Zugeben eines organischen Lösungsmittels und eines Dispergiermittels zu der in Schritt (b) erhaltenen Mischung;
d. Mahlen durch Rückführung der in Schritt (c) erhaltenen Mischung, bis der D90 der Partikelgrößenverteilung der Mischung aus der Glasfritte und dem mineralischen Pigment zwischen 1 und 2 $\mu$m liegt;
e. Zugeben eines Tensids zu der in Schritt (d) erhaltenen gemahlenen Zubereitung.

**11.** Verfahren zum Herstellen eines glasierten Glaskeramikkochfelds, umfassend die folgenden Schritte:

a. Bereitstellen eines Kochfelds aus Glaskeramikmutterglas;
b. Aufbringen einer rohen Schmelzglasur auf die Oberfläche des Kochfelds aus Mutterglas durch einen Tintenstrahldruckvorgang einer mineralischen Tinte nach einem der Ansprüche 1 bis 9;
c. Wärmebehandeln des Kochfelds aus Glaskeramikmutterglas, umfassend die rohe Schmelzglasur, nach dem folgendem Keramisierungszyklus:

i. eine Keimungsphase zwischen 650 °C und 860 °C 15 Minuten bis 4 Stunden lang,
ii. eine Wachstumsphase zwischen 860 °C und 1100 °C 10 Minuten bis 2 Stunden lang.

**12.** Verfahren zum Herstellen eines glasierten Glaskeramikkochfelds nach Anspruch 11, wobei der Tintenstrahldruckvorgang ein Tropfen-auf-Abruf-Tintenstrahldruckvorgang ist.

**13.** Verfahren zum Herstellen eines glasierten Glaskeramikkochfelds nach einem der Ansprüche 11 bis 12, wobei das Kochfeld aus Glaskeramikmutterglas aus einem Lithium-Aluminosilicatglas ausgebildet ist, umfassend die folgenden Bestandteile innerhalb der nachstehend definierten Gewichtsgrenzen, ausgedrückt als Massenprozente des Glases:

| | |
|---|---|
| $SiO_2$ | 52-75 %, |
| $Al_2O_3$ | 12-27 %, |
| $Li_2O$ | 1,5-5,5 %, |
| $Na_2O$ | 0-3 %, |
| $K_2O$ | 0-3 %, |
| CaO | 0-5 %, |
| MgO | 0-5 %, |
| SrO | 0-5 %, |
| BaO | 0-5%, |
| ZnO | 0-5 %, |
| $TiO_2$ | 1-6 %, |
| $ZrO_2$ | 0-3 %, |
| $P_2O_5$ | 0-8 %. |

**14.** Glasiertes Glaskeramikkochfeld, das in der Lage ist, mittels eines Verfahrens nach einem der Ansprüche 11 bis 13 erhalten zu werden.

**15.** Kochvorrichtung, umfassend ein glasiertes Glaskeramikkochfeld nach Anspruch 14.

**Claims**

**1.** A mineral ink for inkjet printing on a mineral substrate comprising:

- a glass frit,
- an organic solvent,
- a dispersant, and
- a surfactant,

**characterized in that** the glass frit comprises the following constituents in the weight limits defined below expressed as percentages by weight of the glass frit:

35 to 50% of $SiO_2$,
15 to 25% of $Al_2O_3$,
1.5 to 4% of $Li_2O$,
22 to 32% of $B_2O_3$,
0 to 2% of $Na_2O$,
2 to 5% of $K_2O$,
1 to 5% of CaO,
1 to 4% of $ZrO_2$.

**2.** The mineral ink as claimed in claim 1, such that it comprises, in addition, a mineral pigment.

**3.** The mineral ink as claimed in either one of claims 1 and 2, such that the sum of the percentages by weight of the glass frit and of the mineral pigment represents 50 to 80% by weight of the mineral ink.

**4.** The mineral ink as claimed in either one of claims 2 and 3, such that the percentage by weight of the glass frit represents 65% to 90% by weight of the sum of the weight percentages of the glass frit and of the mineral pigment.

**5.** The mineral ink as claimed in any one of claims 1 to 4, such that the organic solvent represents 70 to 90% by weight of the sum of the percentages by weight of the organic solvent, the dispersant and the surfactant.

6. The mineral ink as claimed in any one of claims 1 to 5, such that the organic solvent is an organic compound that is liquid at ambient temperature or a mixture of organic compounds that are liquid at ambient temperature comprising at least one alcohol functional group.

7. The mineral ink as claimed in any one of claims 1 to 6, such that the dispersant is a copolymer or a mixture of copolymers comprising at least one acid functional group.

8. The mineral ink as claimed in any one of claims 1 to 7, such that the surfactant is a polyether or a mixture of polyethers.

9. The mineral ink as claimed in any one of claims 1 to 8, such that the D90 of the particle size distribution of the mixture of the glass frit and the mineral pigment is between 1 $\mu$m and 2 $\mu$m.

10. A method for manufacturing a mineral ink comprising the following steps:

   a. providing a glass frit which comprises the following constituents in the weight limits defined below expressed as percentages by weight of the glass frit:

   35 to 50% of $SiO_2$,
   15 to 25% of $Al_2O_3$,
   1.5 to 4% of $Li_2O$,
   22 to 32% of $B_2O_3$,
   0 to 2% of $Na_2O$,
   2 to 5% of $K_2O$,
   1 to 5% of CaO,
   1 to 4% of $ZrO_2$;

   b. mixing the glass frit with a mineral pigment;
   c. adding an organic solvent and a dispersant to the mixture obtained in step (b);
   d. recirculation milling of the mixture obtained in step (c) until the D90 of the particle size distribution of the mixture of the glass frit and the mineral pigment is between 1 and 2 $\mu$m ;
   e. adding a surfactant to the milled preparation obtained in step (d).

11. A process for manufacturing an enameled glass-ceramic plate comprising the following steps:

   a. providing a plate of glass-ceramic parent glass;
   b. depositing a green enamel on the surface of the plate of parent glass via a method of inkjet printing of a mineral ink as claimed in any one of claims 1 to 9;
   c. heat treating the plate of glass-ceramic parent glass comprising the green enamel according to the following ceramization cycle:

   i. a nucleation hold between 650°C and 860°C, for 15 minutes to 4 hours,
   ii. a growth hold between 860°C and 1100°C, for 10 minutes to 2 hours.

12. The process for manufacturing an enameled glass-ceramic plate as claimed in claim 11, such that the inkjet printing method is a drop-on-demand type inkjet printing method.

13. The process for manufacturing an enameled glass-ceramic plate as claimed in either of claims 11 and 12, such that the plate of glass-ceramic parent glass is formed by a lithium aluminosilicate glass comprising the following constituents in the weight limits defined below expressed as percentages by weight of the glass:

   $SiO_2$     52-75%,
   $Al_2O_3$   12-27%,
   $Li_2O$     1.5-5.5%,
   $Na_2O$     0-3%,
   $K_2O$      0-3%,
   CaO        0-5%,
   MgO        0-5%,

(suite)

| | |
|---|---|
| SrO | 0-5%, |
| BaO | 0-5%, |
| ZnO | 0-5%, |
| $TiO_2$ | 1-6%, |
| $ZrO_2$ | 0-3%, |
| $P_2O_5$ | 0-8%. |

**14.** An enameled glass-ceramic plate that may be obtained using a process as claimed in any one of claims 11 to 13.

**15.** A cooking device comprising an enameled glass-ceramic plate as claimed in claim 14.